# DEMANDE DE BREVET EUROPEEN

(11) **EP 4 803 397 A1**
(43) Date de publication de la demande: **09.09.2026**
(21) Numéro de dépôt: 26157759.7
(22) Date de dépôt: 11.02.2026
(51) Int. Cl.: B60W 50/14, B60K 35/21, B60K 35/215, B60K 35/28, B60W 10/06, B60W 10/08, B60W 20/40, B60K 35/22

(54) **PROCÉDÉ DE CONTRÔLE D'UN GROUPE MOTOPROPULSEUR DE VÉHICULE HYBRIDE COMPRENANT UN INDICATEUR DE PUISSANCE DEMANDÉE**

(30) Priorité: 03.03.2025 FR 2502106
(71) Demandeur: Stellantis Auto SAS, 78300 Poissy (FR)
(72) Inventeur: FRANCOIS, LOUIS, 28210 NOGENT LE ROI (FR); HUGEL, SEBASTIEN, 78400 CHATOU (FR); HUMBERT, BERTRAND, 90330 CHAUX (FR)
(74) Mandataire: PSIP

(57) **Abrégé**

Procédé de contrôle d'un groupe motopropulseur de véhicule hybride comprenant un moteur thermique et une machine électrique de traction, le conducteur disposant d'un indicateur de la puissance demandée qui est traduite par un couple aux roues motrices demandé (20), comportant un index affichant (A) la puissance maximum possible (22) en mode de roulage électrique, qui ne s'affiche plus (NA) lorsqu'un calcul donne un couple demandé (20) supérieur au couple maximum possible (22), pour un gradient d'augmentation du couple demandé (20) inférieur à un seuil, lorsque ce couple demandé (20) dépasse le couple maximum possible (22), et qu'un différé de démarrage du moteur thermique est appliqué pour optimiser la consommation d'énergie, alors le calcul pour l'index est modifié pour ne plus donner un couple demandé (20) supérieur au couple maximum possible (22).

## Description

0001. La présente invention concerne un procédé de contrôle d'un groupe motopropulseur de véhicule automobile hybride avec motorisation thermique et électrique, disposant d'un indicateur de la puissance demandée par le conducteur sur les roues motrices, ainsi qu'un système de gestion et un véhicule automobile équipés de dispositifs mettant en œuvre ce procédé de contrôle.

0002. Un type d'indicateur de puissance délivrée aux roues par le groupe motopropulseur d'un véhicule hybride comprenant un moteur thermique et une machine électrique de traction, présenté notamment par le document US-A1-2014182509, comporte un cadran circulaire disposant d'une aiguille qui affiche en permanence la puissance demandée par le conducteur lors du roulage, appelé « powermeter » en langue anglaise.

0003. Le cadran d'affichage présente le mode de roulage en cours, comportant en particulier le roulage électrique, le roulage thermique, un mode de forte puissance instantanée utilisant les deux sources d'énergie, appelé « boost » en langue anglaise, et un mode de régénération de la batterie de traction comprenant une récupération d'énergie lors des freinages et dans les descentes.

0004. Des segments disposés sur le cadran présentent les limites de puissance pour les différents modes, en particulier le point de redémarrage du moteur thermique quand la machine électrique seule ne peut répondre à la demande du conducteur.

0005. L'affichage de la puissance instantanée demandée par le conducteur lui permet en particulier d'adapter sa conduite à l'approche du déclenchement du mode thermique s'il souhaite éviter ce fonctionnement, en limitant sa demande de puissance afin de rester en roulage électrique.

0006. Par ailleurs il est connu lors du roulage en mode électrique, de disposer sur le cadran d'affichage de la puissance demandée un index s'allumant en indiquant le seuil supérieur de puissance maximum du roulage en mode électrique.

0007. Dans ce cas lors d'une demande du conducteur pour une puissance délivrée croissante, quand le niveau de puissance franchit le seuil supérieur, l'aiguille de la puissance demandée dépassant l'index, une requête est adressée au moteur thermique pour démarrer afin d'ajouter une puissance complémentaire répondant à la demande, et en même temps l'index s'éteint.

0008. Toutefois suivant les conditions d'évolution de la puissance demandée, arrivé à ce seuil supérieur certains procédés de contrôle de la gestion du groupe motopropulseur réalisent des calculs d'optimisation de la consommation d'énergie donnant des instants de démarrage du moteur thermique qui peuvent être différés. 0009. En particulier pour un gradient de demande de couple élevé avec un conducteur qui accélère fortement, le démarrage du moteur thermique peut être instantané lors du passage du seuil supérieur du roulage en mode électrique. 0010. Pour un gradient de demande de couple faible avec un conducteur accélérant doucement le démarrage du moteur thermique peut être légèrement différé alors que l'index s'est déjà éteint au moment de ce passage. On obtient dans ce cas un moment intermédiaire où l'index indiquant la fin du mode électrique s'est éteint, en annonçant théoriquement que le moteur thermique apporte une puissance complémentaire alors que ce moteur n'a toujours pas démarré.

0011. On obtient alors un fonctionnement du véhicule qui n'est pas conforme à l'affichage présenté au conducteur ce qui peut créer une incompréhension, perturber le bon usage de l'indicateur de puissance au détriment de la consommation d'énergie, ou même l'inquiéter sur le bon fonctionnement du véhicule.

0012. La présente invention a notamment pour but d'éviter ces problèmes de l'art antérieur.

0013. Elle propose à cet effet un procédé de contrôle d'un groupe motopropulseur de véhicule hybride comprenant un moteur thermique et une machine électrique de traction, un indicateur de la puissance demandée par un conducteur, cette puissance demandée étant traduite par un couple aux roues motrices demandé, comportant un index affichant la puissance maximum possible délivrable par un mode de roulage électrique, qui ne s'affiche plus lorsqu'un calcul donne un couple demandé supérieur ou égal au couple maximum possible et qui correspond à un démarrage du moteur thermique, ce procédé étant remarquable en ce que pour un gradient d'augmentation du couple demandé inférieur à un seuil, lorsque ce couple demandé est supérieur ou égal au couple maximum possible, et qu'un différé de démarrage du moteur thermique est appliqué pour optimiser une consommation d'énergie, alors le calcul pour l'index est modifié pour ne plus donner un couple demandé supérieur ou égal au couple maximum possible. 0014. Un avantage de ce procédé de contrôle est que la modification du calcul pour l'index permet de laisser cet index allumé alors que l'aiguille de l'indicateur de puissance demandée a franchi cet index, jusqu'à ce que le moteur thermique démarre.

0015. En particulier pour un gradient d'augmentation de couple faible, alors que la demande en puissance n'a pas encore beaucoup dépassé le seuil supérieur, le procédé de contrôle du groupe motopropulseur peut différer le démarrage pour réaliser une optimisation de la consommation d'énergie alors que l'affichage de l'index reste allumé grâce à son calcul modifié. On présente ainsi au conducteur une conformité avec l'état du véhicule comprenant le moteur thermique qui n'a pas encore démarré.

0016. Le procédé de contrôle selon l'invention peut comporter de plus une ou plusieurs des caractéristiques suivantes, qui peuvent être combinées entre elles. 0017. Avantageusement, la modification du calcul est arrêtée au moment du démarrage du moteur thermique.

0018. Avantageusement, le calcul établi un pourcentage correspondant à cent fois la division du couple demandé par le couple maximum possible.

0019. Dans ce cas, avantageusement le calcul est modifié en établissant une saturation du pourcentage obtenu à 99%.

0020. Avantageusement, le procédé allume ou éteint un voyant de fonctionnement du moteur thermique suivant l'état réel de ce moteur thermique. 0021. L'invention a aussi pour objet un système de gestion d'un groupe motopropulseur de véhicule hybride, remarquable en ce qu'il comporte des dispositifs mettant en œuvre un procédé de contrôle comprenant l'une quelconque des caractéristiques précédentes.

0022. Dans ce cas, avantageusement l'index de puissance maximum possible est disposé sur un cadran formant l'indicateur de couple aux roues, en face de la position correspondant à ce couple maximum.

0023. De plus, avantageusement le système de gestion comporte un voyant de fonctionnement de la machine électrique et un voyant de fonctionnement du moteur thermique disposés à côté de l'indicateur de couple aux roues.

0024. L'invention a de plus pour objet un véhicule automobile hybride avec un groupe motopropulseur équipé d'un moteur thermique et d'une machine électrique de traction, remarquable en ce qu'il comporte un système de gestion de ce groupe motopropulseur comprenant la caractéristique précédente, présentant sur un tableau de bord l'indicateur et les voyants.

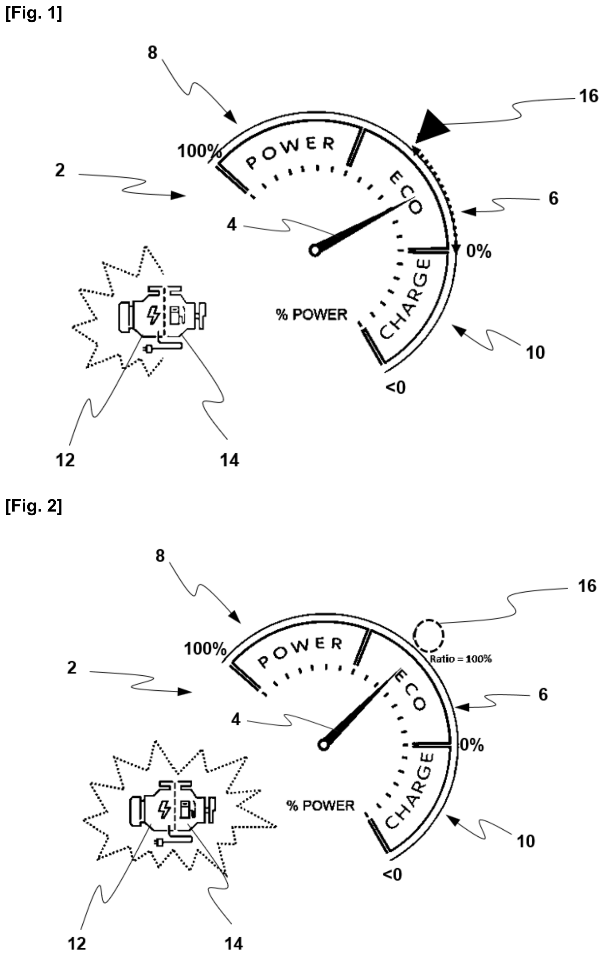

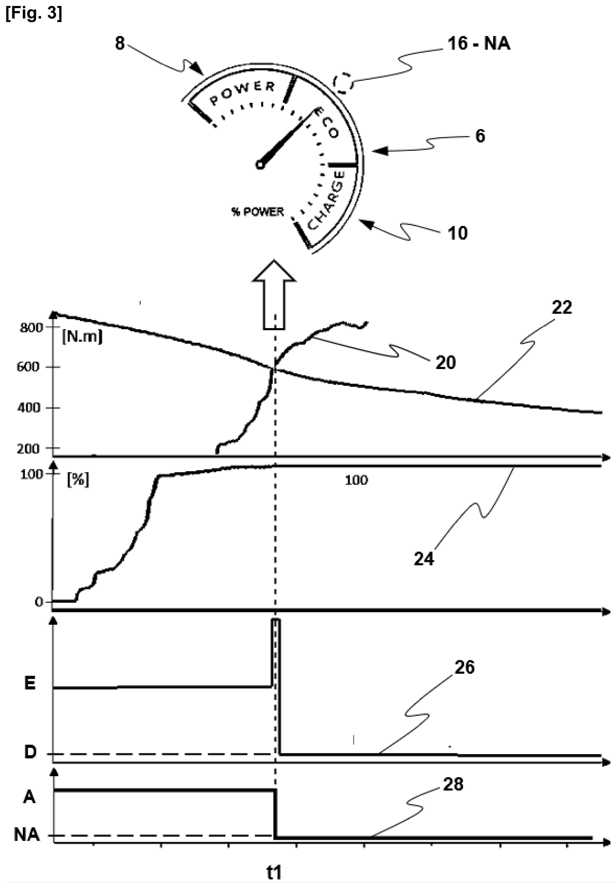

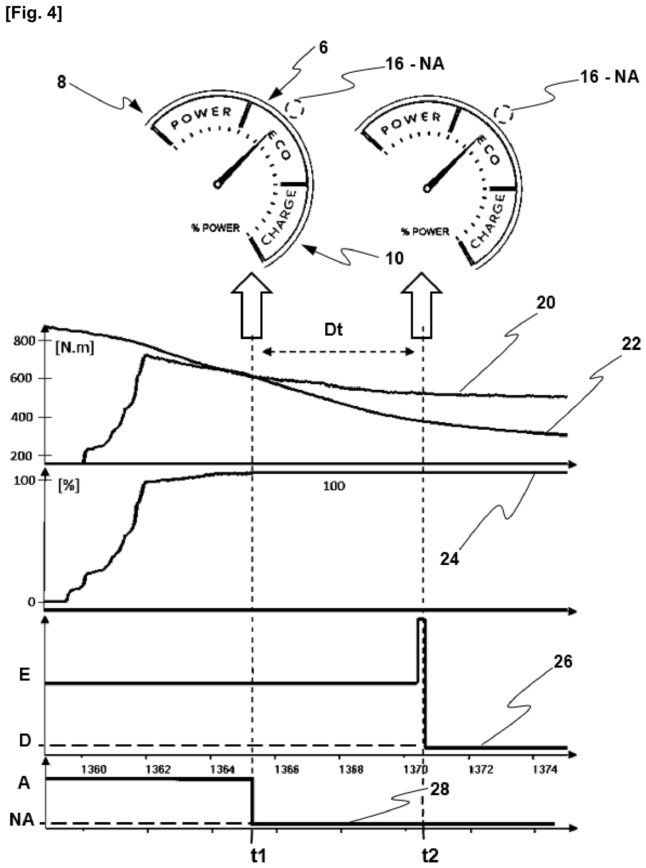

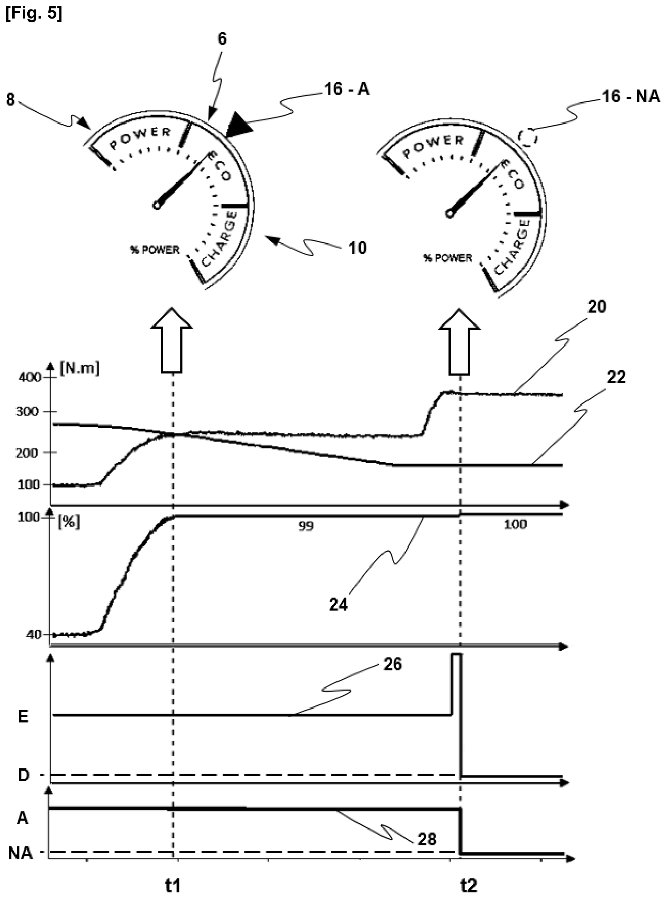

0025. L'invention sera mieux comprise et d'autres caractéristiques et avantages apparaîtront plus clairement à la lecture de la description ci-après donnée à titre d'exemple, en référence aux dessins annexés dans lesquels :
0026. [Fig. 1] présente un indicateur de puissance demandée d'un véhicule hybride lors du roulage en mode électrique, avec un affichage du seuil supérieur de puissance de ce mode ;
0027. [Fig. 2] présente cet indicateur après le passage en mode thermique ;
0028. [Fig. 3] est un diagramme présentant en fonction du temps le fonctionnement d'un procédé de contrôle du groupe motopropulseur selon l'art antérieur pour un fort gradient de demande de puissance ;
0029. [Fig. 4] est un diagramme présentant le fonctionnement de ce procédé pour un faible gradient de demande de puissance ; et
0030. [Fig. 5] est un diagramme présentant le fonctionnement d'un procédé de contrôle selon l'invention pour un faible gradient de demande de puissance.

0031. La figure 1 présente sur un véhicule hybride comportant un moteur thermique et une machine électrique de traction, un indicateur de puissance demandée par le conducteur correspondant au couple appliqué aux roues motrices, comprenant un cadran circulaire 2 avec une aiguille centrale 4, présentant une puissance positive disponible comprise entre 0% et 100%.

0032. La zone de puissance aux roues positive comporte à partir de 0% une première partie 6 « ECO » correspondant à une puissance modérée économique en énergie, et à partir d'une limite une deuxième partie 8 « POWER » correspondant à des puissances élevées consommant plus d'énergie, qui se termine à 100%. En particulier la deuxième partie 8 correspond à des demandes de forte puissance pour par exemple doubler un véhicule, monter une côte ou rouler à grande vitesse.

0033. Le cadran 2 est complété vers le bas, en dessous de la limite à 0%, par une partie à puissance négative 10 correspondant à un couple de freinage appliqué par les roues motrices, et délivrant un courant de recharge « CHARGE » pour récupérer cette énergie lors des freinages ou du roulage en descente.

0034. Sur le côté gauche du cadran 2 deux indicateurs de fonctionnement du groupe motopropulseur présentent à gauche un voyant indiquant le fonctionnement de la machine électrique 12, et à droite un voyant indiquant le fonctionnement du moteur thermique 14.

0035. Sur le bord droit du cadran 2, dans la première partie 6 de roulage ECO, un index 16 indique le niveau de la puissance maximum délivrable par le mode de roulage électrique, correspondant environ aux deux tiers de cette première partie. 0036. Lors d'un roulage sur le mode électrique présenté figure 1, l'aiguille 4 étant en dessous de l'index 16 avec le voyant de la machine électrique 12 allumé, cet index reste aussi allumé pour indiquer au conducteur la limite supérieure qu'il ne pourra pas dépasser avec ce mode.

0037. La figure 2 présente la demande de puissance aux roues qui est supérieure à la limite de l'index 16. Le moteur thermique a démarré avec le voyant de machine électrique 12 et le voyant du moteur thermique 14 allumés, et l'index 16 est éteint.

0038. Le diagramme de la figure 3 présente en fonction du temps t, sur la partie supérieure, exprimée en Nm, la demande de couple appliqué aux roues 20 correspondant à la puissance qui est demandée, et le couple aux roues maximum autorisé en mode de roulage électrique 22. La machine électrique délivrant une puissance sensiblement constante, le couple aux roues maximum autorisé 22 décroît en fonction de l'augmentation de la vitesse du véhicule pour obtenir cette puissance constante.

0039. Le diagramme présente ensuite en partant du haut le pourcentage % du couple demandé par rapport au couple maximum délivrable 24 sur le mode de roulage électrique, correspondant à cent fois la division du couple demandé 20 par le couple maximum autorisé 22, qui est saturé à 100%.

0040. Le diagramme présente ensuite le fonctionnement du moteur thermique 26 comportant un état éteint E et un état démarré D, puis l'affichage 28 de l'index 16 comportant un état affiché A et un état non affiché NA. L'état de l'affichage de l'index 28 change quand le calcul du pourcentage de couple demandé 24 atteint 100%, ce qui correspond au démarrage du moteur thermique.

0041. Sur cette figure 3 on a un gradient de croissance de demande de couple 20 important, le conducteur demandant rapidement une forte accélération du véhicule.

0042. Avant l'instant t1 le couple demandé 20 est inférieur au couple maximum de roulage électrique 22, le pourcentage de couple demandé 24 est inférieur à 100. L'état du moteur thermique 26 est éteint E. L'état de l'affichage 28 de l'index 16 est affiché A.

0043. A l'instant t1 le couple demandé 20 est égal au couple maximum de roulage électrique 22, le pourcentage de couple demandé 24 est égal à 100%. On a alors instantanément un démarrage du moteur thermique avec son état 26 qui passe à D, et l'index 16 qui s'éteint avec l'état de son affichage 28 qui passe à non affiché NA. Sur le cadran 2 l'aiguille 4 est aligné sur l'index 16 qui s'éteint à ce moment. 0044. La figure 4 présente un gradient de croissance de demande de couple 20 qui est d'abord fort, puis à l'approche du couple maximum de roulage électrique 22 devient décroissant avec un faible gradient inférieur à un seuil maximum de gradient. Le conducteur demande une accélération lente du véhicule.

0045. A l'instant t1 le calcul du pourcentage de couple demandé 24 donne 100%. Toutefois la demande de couple 20 continue à décroître lentement en restant proche du couple maximum de roulage électrique 22. Dans ce cas afin de réaliser une optimisation de la consommation d'énergie, on diffère le démarrage du moteur thermique qui se produit à l'instant t2, après un décalage de temps Dt.

0046. On obtient d'abord à l'instant t1 avec le calcul du pourcentage à 100%, l'index 16 qui ne s'affiche plus avec un état de son affichage 28 qui passe à non affiché NA, mais un état du moteur thermique 26 qui reste éteint E. On obtient ensuite à l'instant t2 un état du moteur thermique 26 qui est démarré D. Pendant l'espace de temps intermédiaire Dt le conducteur peut être perturbé à cause de la différence entre ces deux états.

0047. La figure 5 présente un gradient de croissance de demande de couple 20 qui a l'instant t1 devient faible et atteint le couple maximum de roulage électrique 22, avec ensuite une demande de couple constante. Le conducteur demande aussi une accélération lente du véhicule.

0048. Pour optimiser la consommation d'énergie le moteur thermique n'est pas démarré, et son état 26 reste éteint E.

0049. Dans ce cas à partir de l'instant t1 le calcul du pourcentage est modifié en saturant le pourcentage de couple demandé 24 à 99%, et donc inférieur à 100%, ce qui donne un état de l'affichage de l'index 28 qui reste à affiché A. Le moteur thermique n'a pas démarré, l'index 16 sur le tableau de bord du véhicule reste allumé et le voyant du moteur thermique 14 reste éteint ce qui est cohérent pour le conducteur.

0050. Un peu avant l'instant t2 le conducteur augmente sa demande de couple 20 avec un fort gradient, pour la stabiliser ensuite à l'instant t2 où le moteur thermique démarre avec son état qui passe a démarré D.

0051. Au moment du démarrage du moteur thermique le calcul du pourcentage retire la saturation à 99% du pourcentage de couple demandé 24, qui passe alors à 100%. On obtient de suite un état de l'affichage de l'index 28 qui passe à non affiché NA, avec cet index 16 qui s'éteint seulement à ce moment sur le tableau de bord. En même temps le voyant du moteur thermique 14 s'allume ce qui est cohérent.

0052. En pratique l'espace de temps intermédiaire Dt est de quelques secondes, notamment inférieur à 10 secondes.

0053. On réalise ainsi de manière simple, en modifiant le procédé de contrôle, sans changer de dispositif ni le fonctionnement du véhicule, et en gardant les optimisations de la consommation d'énergie, une amélioration de la compréhension du conducteur sur le fonctionnement de son véhicule qui lui permet de mieux gérer la consommation d'énergie. De plus on évite des retours des clients signalant ce qui semblerait une anomalie de fonctionnement.

## Revendications

1. Procédé de contrôle d'un groupe motopropulseur de véhicule hybride comprenant un moteur thermique et une machine électrique de traction, un indicateur de la puissance demandée (2) par un conducteur, cette puissance demandée (2) étant traduite par un couple aux roues motrices demandé (20), comportant un index (16) affichant (A) la puissance maximum possible (22) délivrable par un mode de roulage électrique, qui ne s'affiche plus (NA) lorsqu'un calcul donne un couple demandé (20) supérieur ou égal au couple maximum possible (22) et qui correspond à un démarrage du moteur thermique, **caractérisé en ce que** pour un gradient d'augmentation du couple demandé (20) inférieur à un seuil, lorsque ce couple demandé (20) est supérieur ou égal au couple maximum possible (22), et qu'un différé de démarrage du moteur thermique est appliqué pour optimiser une consommation d'énergie, alors le calcul pour l'index est modifié pour ne plus donner un couple demandé (20) supérieur ou égal au couple maximum possible (22).

2. Procédé de contrôle selon la revendication 1, **caractérisé en ce que** la modification du calcul est arrêtée au moment du démarrage du moteur thermique.

3. Procédé de contrôle selon la revendication 1 ou 2, **caractérisé en ce que** le calcul établi un pourcentage correspondant à cent fois la division du couple demandé (20) par le couple maximum possible (22).

4. Procédé de contrôle selon la revendication 3, **caractérisé en ce que** le calcul est modifié en établissant une saturation du pourcentage obtenu à 99%.

5. Procédé de contrôle selon l'une quelconque des revendications précédentes, **caractérisé en ce qu'**il allume ou éteint un voyant de fonctionnement du moteur thermique (14) suivant l'état réel de ce moteur thermique.

6. Système de gestion d'un groupe motopropulseur de véhicule hybride, **caractérisé en ce qu'**il comporte des dispositifs mettant en œuvre un procédé de contrôle selon l'une quelconque des revendications précédentes.

7. Système de gestion suivant la revendication 6, **caractérisé en ce que** l'index de puissance maximum possible (16) est disposé sur un cadran formant l'indicateur de couple aux roues (2), en face de la position correspondant à ce couple maximum.

8. Système de gestion selon la revendication 6 ou 7, **caractérisé en ce qu'**il comporte un voyant de fonctionnement de la machine électrique (12) et un voyant de fonctionnement du moteur thermique (14) disposés à côté de l'indicateur de couple aux roues (2).

9. Véhicule automobile hybride avec un groupe motopropulseur équipé d'un moteur thermique et d'une machine électrique de traction, **caractérisé en ce qu'**il comporte un système de gestion de ce groupe motopropulseur selon la revendication 8, présentant sur un tableau de bord l'indicateur (2) et les voyants (12, 14).
